# EUROPEAN PATENT APPLICATION

(11) **EP 1 475 706 A1**
(43) Date of publication of application: **10.11.2004**
(21) Application number: 04252417.3
(22) Date of filing: 26.04.2004
(51) Int. Cl.: G06F 9/46

(54) **Method and apparatus for providing a client-side local proxy object for a distributed object-oriented system**

(30) Priority: 09.05.2003 US 435415
(71) Applicant: LUCENT TECHNOLOGIES INC., Murray Hill, New Jersey 07974-0636 (US)
(72) Inventor: Prabhu, Sameer D., Naperville, Illinois 60563 (US)
(74) Representative: Watts, Christopher Malcolm Kelway, Dr.

(57) **Abstract**

This invention relates to a method and apparatus for providing a client-side local proxy object for a distributed object oriented system. More particularly, the invention, in one form, relates to implementation of a client-side local proxy object for a Java RMI based system and, in another form, relates to a CORBA based system.

## Description

### BACKGROUND OF THE INVENTION

This invention relates to a method and apparatus for providing a client-side local proxy object for a distributed object oriented system. More particularly, the invention, in one form, relates to implementation of a client-side local proxy object for a Java RMI protocol based system. In another form, it is adaptable to the Common Object Request Broker Architecture (CORBA) protocol.

While the invention is particularly directed to the art of providing local proxies in Java RMI based systems, and will be thus described with specific reference thereto, it will be appreciated that the invention may have usefulness in other fields and applications. For example, as noted above, the invention may be used in other situations where local proxies are desired such as in a CORBA based system.

By way of background, distributed object oriented systems have become common part of many projects/products. Java's Remote Method Invocation (RMI) from Sun Microsystems, Common Object Request Broker Architecture (CORBA) from Object Management Group Organization, Simple Object Access Protocol (SOAP) from World-wide Web Consortium (W3C) are some of the open standard technologies used to implement object oriented distributed systems.

Use of RMI (or CORBA) techniques simplifies implementation of distributed object oriented systems. These techniques, as well as the associated programming languages and command structure for the components of systems of these types, are well known. They allow invocation of remote services provided by a remote server and passing of software objects to be sent across process or machine boundaries. However, there still exists complexity in the client application side to use RMI, or CORBA, based server/system.

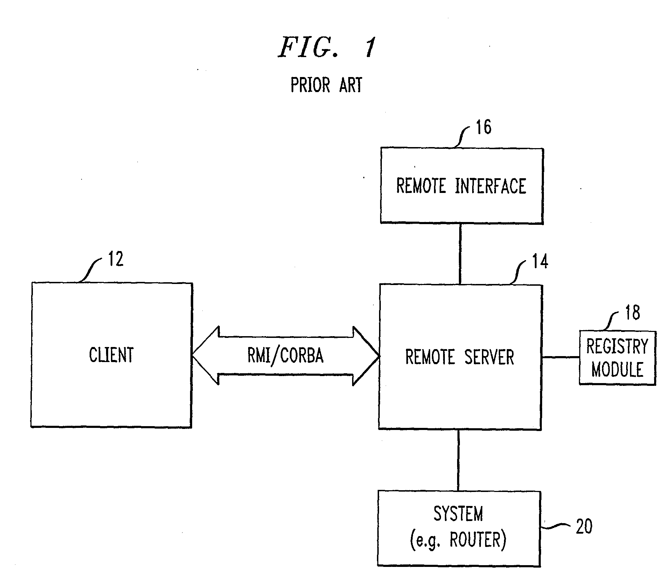

By way of example, with reference to Figure 1, a known system 10 is shown. System 10 includes a client 12 and a remote server 14. As illustrated, the server 14 is an RMI based server that communicates with a remote interface 16, an RMI registry module 18, and a router 20.

In such a system, there are numerous difficulties in implementation. For example, the client 12 is required to understand the RMI protocol and implement the remote interface 16. Moreover, the client 12 is required to locate and access the RMI registry module 18 in order to obtain a reference to the RMI based server 14. In addition, the client 12 must have the capability to handle all remote exceptions, e.g. server down messages. Last, the system 10 would require that every client have code written and tested so that each client type could function in the system. Similar difficulties exist for CORBA-based systems. Therefore, a more efficient technique is desired.

The present invention contemplates such a new and improved approach that resolves the above-referenced difficulties and others.

### SUMMARY OF THE INVENTION

A method and apparatus for providing a local proxy object for a distributed object oriented system are provided.

In one aspect of the invention, the system comprises an object-oriented server, remote interfaces operative to communicate with the object-oriented server, a registry module associated with the object-oriented server, and a local proxy object operative to process information for the client.

In another aspect of the invention, the local proxy object is operative to communicate with the object-oriented server, remote interfaces, and the registry.

In another aspect of the invention, a properties file is operative to store information about the object-oriented server that includes information such as the server's IP address, port number etc.

In another aspect of the invention, the system is based on the Remote Method Invocation (RMI).

In another aspect of the invention, the system is based on Common Object Request Broker Architecture (CORBA).

In another aspect of the invention, a method comprises initializing a main remote server, registering the main remote server with a registry module, instantiating a local proxy object by a client to access the main remote server, obtaining information on the main remote server by the local proxy object, contacting the main remote server by the local proxy object, establishing connection between the local proxy object and the main remote server, requesting information from the main remote server by the client through the local proxy object, returning the information to the local proxy object from the main remote server and returning the information to the client from the local proxy object.

In another aspect of the invention, a method comprises initializing a main remote server, registering the main remote server with a registry module, instantiating a local proxy object by a client to access the main remote server, obtaining information on the main remote server by the local proxy object, contacting the main remote server by the local proxy object, establishing connection between the local proxy object and the main remote server, requesting information from the main remote server by the client through the local proxy object, registering for some event (e.g. alarm event) by the client with the remote main server through the local proxy object, saving information about the registration by the local proxy object and periodically accessing the remote main server by the local proxy object to allow for an automatic re-registration of the client in an event of server failure and re-start.

In another aspect of the invention, a method comprises initializing a main remote server, registering the main remote server with a registry module, instantiating a local proxy object by a client to access the main remote server, obtaining information on the main remote server by the local proxy object, contacting the main remote server by the local proxy object and establishing connection between the local proxy object and the main remote server.

Further scope of the applicability of the present invention will become apparent from the detailed description provided below. It should be understood, however, that the detailed description and specific examples, while indicating preferred embodiments of the invention, are given by way of illustration only, since various changes and modifications within the spirit and scope of the invention will become apparent to those skilled in the art.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:
Figure 1 provides an overall view of a prior system;
Figure 2 provides an illustration of an embodiment of the present invention; and,
Figure 3 is a sequence or call-flow diagram illustrating a method of operation of the present invention.

### DETAILED DESCRIPTION OF THE PREFERRED EMBODIMENTS

According to the present invention, a technique of providing a local proxy object to a remote object-oriented server (e.g. RMI or CORBA based) is implemented to disguise the complexity in using an RMI/ CORBA based system from the client point of view. Under this approach, clients using RMI/ CORBA services are not required to understand the RMI/CORBA protocol and complexity involved in locating the RMI registry (or CORBA naming service), the remote server, and implementing remote interfaces, catching remote exceptions, etc. Clients can simply treat and use the remote server's local proxy object as a local object and access all the remote services provided by the server, as if they were local methods. When using a local proxy object of the remote server, the client may not be even aware of use of RMI/ CORBA technology. Notably, the complexity of using the object-oriented standards need not be recognized or treated by the client.

This also reduces the amount of code that clients/users will need to write to access the RMI or CORBA based services provided by the server. Interface testing efforts are minimized. Load balancing (where multiple server instances are available) can also be provided inside the local proxy object.

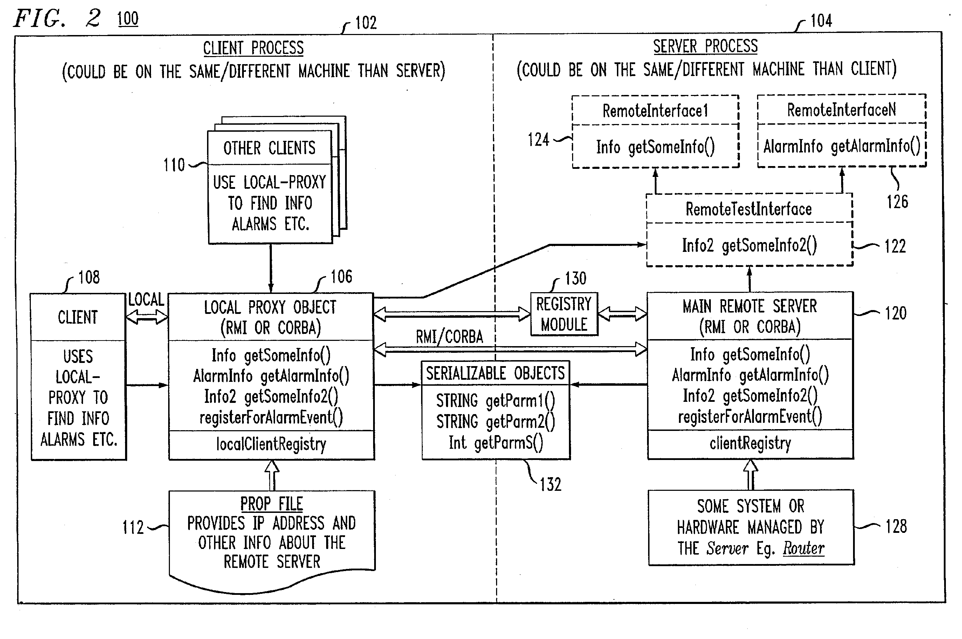

Referring now to the drawings wherein the showings are for purposes of illustrating the preferred embodiments of the invention only and not for purposes of limiting same, Figure 2 provides a view of an exemplary system according to the present invention. As shown, an RMI-based client-server type system 100 is illustrated. Alternatively, as shown, the system 100 may be CORBA-based. While slight differences may exist in the code and command structure between the RMI and CORBA protocols, such alternative systems would operate substantially identically and be likewise structured substantially identically for purposes of implementing the present invention.

In the system 100, a client process side 102 and a server process side 104 are implemented. On the client process side 102, a local proxy object 106 which communicates with a client 108 is provided. Other clients 110 may also be in communication with the local proxy object 106.

The local proxy object 106 is also provided with a database module/file for storing properties that include the IP address and other information about a remote server. The local proxy object 106 includes or comprises software that allows the local proxy object to efficiently communicate with the remote server process side 104 according to the present invention. The local proxy object uses the exact same steps or lines of code that otherwise would have been used by every client type to contact the RMI or CORBA registry to locate the remote server using the server's IP address/machine name, port numbers etc. This is the standard way by which any RMI or CORBA based client contacts the registry module and obtains the remote server's reference. Further the lines of code that the local proxy object uses to call various remote methods, implement remote interfaces and catch remote exceptions is also no different than what client software would have used in the absence of the so-called local proxy object. In fact, this is the type of software code that requires the knowledge of the underneath protocol (e.g. RMI / CORBA) that is now encapsulated in one place inside this local proxy object. It is to be appreciated that the local proxy object may reside in a variety of environments and take a variety of forms. However, in one form, it takes the form of software code that resides on a client device such as a personal computer or personal digital assistant.

On the server process side 104, the system is provided with a main remote server 120 which communicates with remote interfaces 122, 124 and 126. The main remote server (or remote server) 120 is also in communication with a system or hardware managed by the main remote server, for example, a router 128. The server process side 104 is also provided with, in this example, a registry module 130 such as an RMI registry. Of course, if the system were based on CORBA, as opposed to RMI, the RMI registry 130 would be replaced by a CORBA naming service.

As can be seen from Figure 2, at 132, serialized objects can be transmitted between the client local proxy object 106 and the main remote server 120.

Of course, it is to be appreciated that the system shown in Figure 2 is implemented using various hardware and software techniques. The system may take different forms but still falls within the scope of the invention. Notably, as previously referenced, the system may take a form to allow for implementation of both RMI or CORBA based distributed systems or other object-oriented systems having similar functionality and structure.

In the examples shown, this may be a system where client(s) 108, 110 and main remote server 120 are developed by the same organization. Or this may be a case system where main remote server 120 is a separate standalone product manufactured and designed by a different organization or from a third-party vendor. For example, in this case, main remote server 120 is a separate standalone product that manages a system or hardware such as a network router 128. These elements may be associated with an entity possessing accessible information, such as a stock exchange. A client 108 or multiple clients 110 may desire retrieving information of the router 128 from the main remote server 120 using a local proxy object 106. To that end, the main remote server 120 provides Info 1, Info2 and AlarmInfo of the managed router 128.

In addition, the main remote server 120 is the actual back-end, remote server that is monitoring and managing the router hardware. The main remote server 120 implements various services that are described by multiple interfaces (RemoteInterfacel, 2, N) 124 and 126. These multiple interfaces are grouped in another interface called RemoteTestInterface 122 for simplicity.

As mentioned earlier, in the absence of the invention, techniques for accomplishing these tasks are well known. The use of the commands/instructions such as getSomeInfo(), getAlarmInfo(), getSomInfo2(), and registerForAlarmEvent() is typical.

Prior to implementation of the present invention, the client is required to communicate with the components on the server side to establish proper connection through the use of well known and appropriate commands and/or programming languages. However, according to the present invention, the local proxy object performs the functions and tasks previously required to be accomplished by the client. In this regard, local proxy object 106 is the so-called local proxy object that resides in the client process 102 -- but, according to the present invention, it represents the main remote server 120 to the client. As such, the local proxy object is able to issue commands such as getSomeInfo(), getAlarmInfo(), getSomInfb2(), and registerForAlarmEvent(). The software in the local proxy object, in this way, complements that of the remote server 120. When client code instantiates this local proxy object 106, it relies on the local properties file 112 provided by the main remote server 120 to obtain the information about the location of the main remote server 120, such as server's machine name/IP address, port number etc. Local proxy object 106 uses this information to silently contact the registry module 130 to locate the main remote server 120 and to obtain remote server's reference. After locating the main remote server 120, local proxy object 106 silently establishes the connection with the main remote server 120 and becomes ready to receive method calls from client.

In order to provide a simple local call for clients, local proxy object 106 also implements all the remote interfaces 122, 124 and 126 that are implemented by the main remote server 120. But, this implementation is a "dummy" implementation where local proxy object 106 acts as a forwarder and forwards client calls using RMI protocol to the main remote server 120. It handles all the replies including the remote exceptions issued by the backend server. Local proxy object 106 forwards the information received in the reply to the client 108 and converts the remote exceptions and forwards them as local exceptions to the clients.

In this way, the client application trying to access the main remote server 120 is completely unaware of the complex backend activity needed in communicating with the main remote server 120 using RMI protocol. Clients simply use the local proxy object 106 just like any other local object inside the process 102. Client 108 does not have to understand the RMI (or CORBA) protocol, contact the RMI registry (or CORBA naming module) 130, or handle remote interfaces 122, 124 and 126 and exceptions. Indeed, the system could be changed from the RMI protocol to the CORBA protocol and the change would be transparent to the client.

In a case where multiple remote server instances are present to provide the same set of services, a load balancing mechanism can be centrally implemented inside the local proxy object 106 where it keeps track of load information on available servers and sends new call to the idle or less busy server instance. Any load balancing or traffic management techniques that are consistent with the objectives of the preset invention may be used. Information about availability of multiple server instances is kept in the properties file 112.

Further, if client 108 is interested in some special event on the server process side 104 and needs the instant notification from the main remote server 120 when such an event takes place, main remote server 120 provides a registration mechanism (e.g. *registerForAlarmEvent)* for clients to register for such an event and to receive a remote callback. The local proxy object 106 provides a simple local registration method *(registerForAlarmEvent)* for this event and a local callback to client. In addition, the local proxy object 106, since it keeps track of the main remote server 120, can detect server failures and can automatically re-register on client's behalf when the main remote server 120 re-starts. Local proxy object 106 maintains a local list of client registry for this purpose.

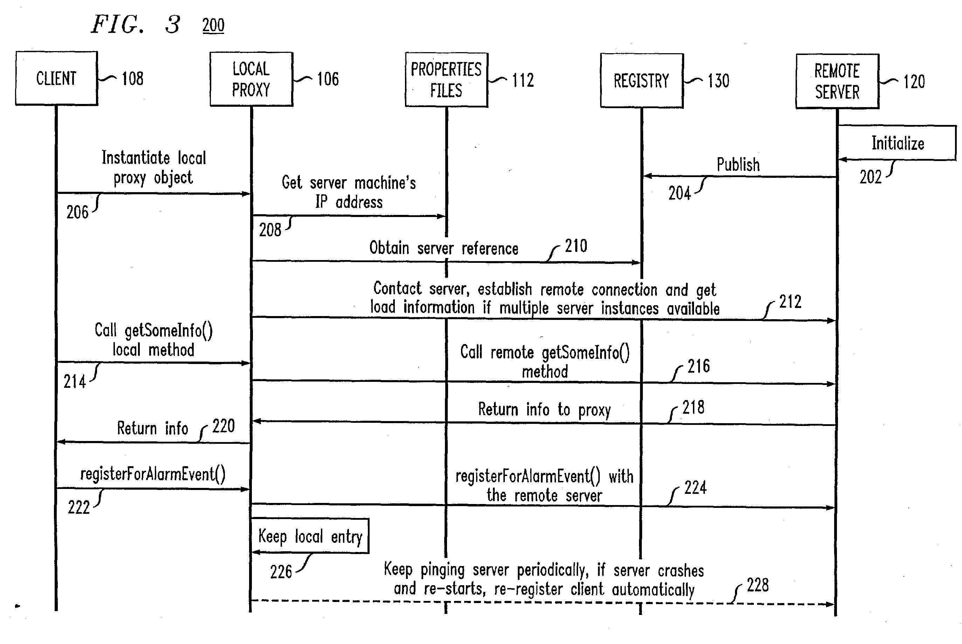

Referring to Figure 3, a sequence, or call-flow, diagram illustrates a method according to the present invention. As shown, main remote server 120 comes up and initializes (at 202). The main remote server 120 then registers itself with the RMI registry 130 to publish its services (at 204).

After some time, client 108 decides to use the services of the main remote server 120. But, instead of going through the difficulty of locating RMI registry 130, contacting remote server etc, client 108 simply uses the local proxy object 106. As such, client 108 instantiates local proxy object 106 as a local object (at 206).

Now local proxy object 106 accesses the property-file 112 for remote server's IP address / machine name (at 208). If multiple instances of main remote server 120 are available, then local proxy object 106 obtains IP addresses of all instances so that it can contact all and keep track of load information for load balancing.

Next, local proxy object 106 contacts the RMI registry 130 to determine the main remote server 120 reference (at 210). Local proxy object 106 contacts the main remote server 120 (at 212) and establishes direct connection with the main remote server 120 and becomes ready for requests from client 108.

In the event that a client 108 requests a service (e.g. *getSomelnfo*())*,* it does so as a local method on the local proxy object 106 in the appropriate address space (at 214). The local proxy object 106 makes a remote call, using RMI, to the main remote server 120 (at 216).

The main remote server 120 returns the information needed by the client 108 to the local proxy object 106 (at 218). The local proxy object 106 returns the information to the client 108 (at 220).

In another circumstance, client 108 may wish to register for future alarm notifications with the local proxy object 106 (at 222). The local proxy object 106 then registers with the main remote server 120 on behalf of client 108 (at 224). The local proxy object 106 saves the client registration information (at 226).

In this process, the local proxy object 106 keeps track of main remote server 120 by periodically "pinging" it (at 228). It can also keep track of load information on the main remote server 120 if there are multiple instances available. If the main remote server 120 crashes and re-starts, the local proxy object 106 automatically and silently re-registers client 108 with the main remote server 120.

Upon implementation of the present invention, the amount of complex code that must be written is reduced. Further, integration of third party software based on an RMI protocol becomes very simple and straightforward. Moreover, this invention also reduces testing time associated with the local proxy developer. The system is also scalable and maintainable, as all the RMI server access code is now centralized and changes can be made transparent to the client. In addition, load balancing, in case of multiple instances of servers, can be handled by a local proxy.

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. A system useful for supporting communication processes between a client and a server, the system being a distributed object-oriented system, the system comprising:
an object-oriented server;
remote interfaces operative to communicate with the object-oriented server;
a registry module associated with the object-oriented server;
a local proxy object operative to process information for the client, the local proxy object being operative to communicate with the object-oriented server, remote interfaces and the registry module; and,
a storage file operative to store information about the object-oriented server.

2. The system as set forth in claim 1 wherein the object-oriented server is a Remote Method Invocation (RMI) server.

3. The system as set forth in claim 1 wherein the registry module is a Remote Method Invocation (RMI) registry module.

4. The system as set forth in claim 1 wherein the local proxy object is based on a Remote Method Invocation (RMI) protocol.

5. The system as set forth in claim 1 wherein the object-oriented server is a Common Object Request Broker Architecture (CORBA) server.

6. The system as set forth in claim 1 wherein the registry module is a Common Object Request Broker Architecture (CORBA) naming service.

7. The system as set forth in claim 1 wherein the local proxy object is based on a Common Object Request Broker Architecture (CORBA) protocol.

8. The method useful for supporting communication between client and a server in a distributed object-oriented system, the method comprising steps of:
initializing a main remote server;
registering the main remote server with a registry module;
instantiating a local proxy object by a client to access the main remote server;
obtaining information on the main remote server by the local proxy object;
contacting the main remote server by the local proxy object;
establishing connection between the local proxy object and the main remote server;
requesting information from the main remote server by the client through the local proxy object;
returning the information to the local proxy object from the main remote server; and,
returning the information to the client from the local proxy object.

9. The method useful for supporting communication between client and a server in a distributed object-oriented system, the method comprising steps of:
initializing a main remote server;
registering the main remote server with a registry module;
instantiating a local proxy object by a client to access the main remote server;
obtaining information on the main remote server by the local proxy object;
contacting the main remote server by the local proxy object;
establishing connection between the local proxy object and the main remote server;
requesting information from the main remote server by the client through the local proxy object;
registering for an alarm event by the test client with the remote main server through the local proxy object;
saving client's information about registration by the local proxy object; and,
periodically accessing the remote main server by the local proxy object to allow for an automatic re-registration of the client in an event of server failure and re-start.

10. The method useful for supporting communication between client and a server in a distributed object-oriented system, the method comprising steps of:
initializing a main remote server;
registering the main remote server with a registry module;
instantiating a local proxy object by a client to access the main remote server;
obtaining information on the main remote server by the local proxy object;
contacting the main remote server by the local proxy object; and,
establishing connection between the local proxy object and the main remote server.
